# EUROPÄISCHE PATENTANMELDUNG

(11) **EP 3 543 555 A1**
(43) Veröffentlichungstag der Anmeldung: **25.09.2019**
(21) Anmeldenummer: 18163049.2
(22) Anmeldetag: 21.03.2018
(51) Int. Cl.: F16D 13/75

(54) **AUSGLEICHSKUPPLUNG UND DRUCKBALKEN MIT EINER SOLCHEN AUSGLEICHSKUPPLUNG**

(71) Anmelder: Heidelberger Druckmaschinen AG, 69115 Heidelberg (DE)
(72) Erfinder: Müller, Andreas, 69120 Heidelberg (DE); Wolf, Dr. Burkhard, 69221 Dossenheim (DE)

(57) **Zusammenfassung**

Eine Ausgleichskupplung (3) umfasst eine erste und zweite Kupplungshälfte (1, 2), die unter elastischer Verformung ineinandersteckbar sind. Die erste Kupplungshälfte (1) weist Federklauen auf und die zweite Kupplungshälfte (2) eine Verzahnung. Die Federklauen weisen eine andere Teilung als die Verzahnung auf.

## Beschreibung

Vorliegende Erfindung betrifft eine Ausgleichskupplung, umfassend eine erste und zweite Kupplungshälfte, die unter elastischer Verformung ineinandersteckbar sind.

In DE 38 43 825 C1 ist ein allseitig bewegliches Gelenk für Gestänge und Gelenkwellen beschrieben, welches aus zwei identisch ausgebildeten Teilen aus einem elastisch verformbaren Kunststoff besteht, wobei die identisch ausgebildeten Kupplungsglieder mit einer Winkelversetzung von 90° unter federnder elastischer Verformung ineinandersteckbar sind. Dieses Gelenk ist auch als Schnellkupplung in Gestängen oder dergleichen verwendbar, insbesondere wenn solche Gestänge ein allseitig bewegliches Gelenk zur Kompensation von Auslenkbewegungen erforderlich machen. Das Gelenk ist unter anderem in Druckmaschinen verwendbar.

Ungünstig daran ist, dass durch die Winkelversetzung von 90° das Ineinanderstecken der beiden Kupplungsglieder in nur wenigen Winkelstellungen relativ zueinander möglich ist.

Deshalb ist die Kupplung des Standes der Technik nicht geeignet für einen Einsatz in einer Digitaldruckmaschine mit einem Druckbalken, dessen Justiervorrichtung Bauteile enthält, die in sehr vielen verschiedenen Winkelstellungen relativ zueinander kuppelbar sein müssen. Bei diesen Bauteilen kann es sich z.B. um eine Schraube und eine Welle zum Rotieren der Schraube handeln.

Aufgabe der Erfindung ist, eine Ausgleichskupplung zu schaffen, deren Kupplungshälften in mehr Winkelstellungen relativ zueinander kuppelbar sind. Außerdem ist es Aufgabe, einen Druckbalken mit einer solchen Ausgleichskupplung zu schaffen.

Die Aufgabe wird durch eine Ausgleichskupplung mit den Merkmalen des Anspruchs 1 und durch einen Druckbalken mit den Merkmalen des Anspruchs 8 gelöst.

Die erfindungsgemäße Ausgleichskupplung umfasst eine erste Kupplungshälfte und eine zweite Kupplungshälfte, die unter elastischer Verformung ineinandersteckbar sind, und ist dadurch gekennzeichnet, dass die erste Kupplungshälfte Federklauen und die zweite Kupplungshälfte eine Verzahnung aufweist, wobei die Federklauen eine andere Teilung als die Verzahnung aufweisen.

Ein Zusatzvorteil der Erfindung ist, dass das Spiel in der Ausgleichskupplung minimiert ist.

Es sind verschiedene Weiterbildungen der erfindungsgemäßen Ausgleichskupplung möglich:
Die erste Kupplungshälfte kann als Rad ausgebildet sein und die Federklauen können radial einfedern.
Die zweite Kupplungshälfte kann als Stern ausgebildet sein.
Die Verzahnung kann eine bestimmte Länge für einen axialen Ausgleich aufweisen.
Es kann vorgesehen sein, dass die Federklauen das Drehmoment übertragen und einen Ausgleich von Fluchtungsfehlern oder -abweichungen zwischen Rotationsachsen der Kupplungshälften bezüglich Achswinkel und/oder radialem Achsversatz bewirken.
Die Anzahl von Zähnen der Verzahnung kann größer als die Anzahl der Federklauen sein. Bei ineinandergesteckten Kupplungshälften kann eine Teilmenge der Federklauen in Lücken der Verzahnung eingreifen und eine andere Teilmenge der Federklauen nicht in die Lücken der Verzahnung eingreifen.

Der erfindungsgemäße Druckbalken für Inkjet, umfasst Druckköpfe in einer Reihe, Justiereinrichtungen zur Justage der Druckköpfe zueinander, wobei die Justiereinrichtungen jeweils mindestens eine Schraube und mindestens eine Welle zum Rotieren der Schraube aufweisen, und ist dadurch gekennzeichnet, dass die Schraube und die Welle über die erfindungsgemäße oder eine ihrer Weiterbildungen entsprechende Ausgleichskupplung miteinander verbunden sind. Die Ausgleichskupplung des erfindungsgemäßen Druckbalkens umfasst also die erste Kupplungshälfte und die zweite Kupplungshälfte, die unter elastischer Verformung ineinandersteckbar sind, wobei die erste Kupplungshälfte die Federklauen aufweist und die zweite Kupplungshälfte die Verzahnung aufweist, und wobei die Federklauen eine andere Teilung als die Verzahnung aufweisen.

Verschiedene Weiterbildungen des erfindungsgemäßen Druckbalkens sind möglich:
Die zweite Kupplungshälfte kann an der Schraube angeordnet sein und die erste Kupplungshälfte kann an der Welle angeordnet sein.
Die Welle kann eine Motorwelle eines Motors sein.

Weiterbildungen der Erfindung ergeben sich auch aus der nachfolgenden Beschreibung von Ausführungsbeispielen und der dazugehörigen Zeichnung, in welcher zeigt:
- Figur 1:: die Gesamtdarstellung einer Digitaldruckmaschine mit einem Druckbalken,
- Figur 2:: die Detaildarstellung einer Justiereinrichtung des Druckbalkens mit einer Ausgleichskupplung,
- Figur 3:: die Seitenansicht einer ersten Kupplungshälfte der Ausgleichskupplung aus Figur 2,
- Figur 4:: die Draufsicht auf die erste Kupplungshälfte aus Figur 3 und
- Figuren 5 bis 7:: die Draufsicht auf verschiedene Modifikationen der ersten Kupplungshälfte und auf eine zweite Kupplungshälfte der Ausgleichskupplung aus Figur 2.

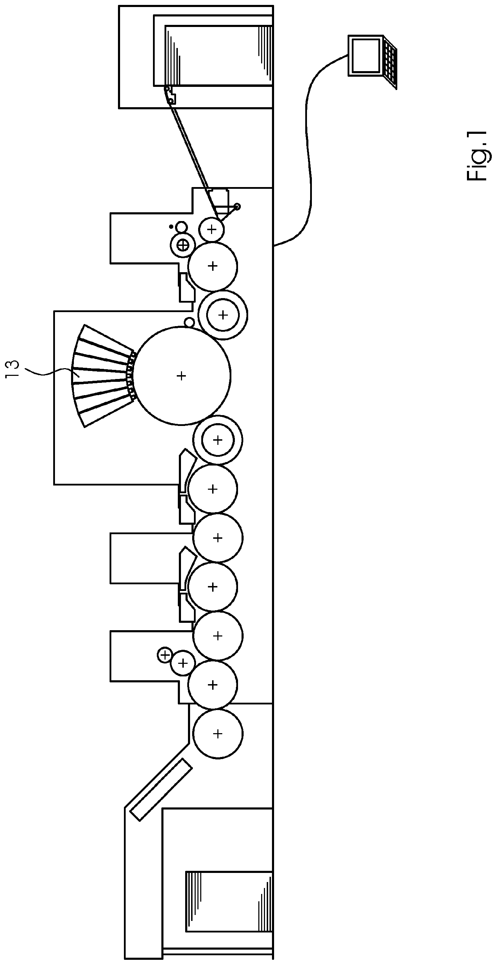

In den Figuren 1 bis 7 sind einander entsprechende Bauteile und Elemente mit den gleichen Bezugszeichen bezeichnet.

In Figur 1 ist eine Digitaldruckmaschine dargestellt, in der Bogen durch Zylinder von einem Anleger über mehrere Stationen zu einem Ausleger transportiert werden. Eine Station umfasst baugleiche Druckbalken 13 für den seitenbreiten Mehrfarbendruck per Inkjet. Jeder Druckbalken 13 druckt eine andere Farbe.

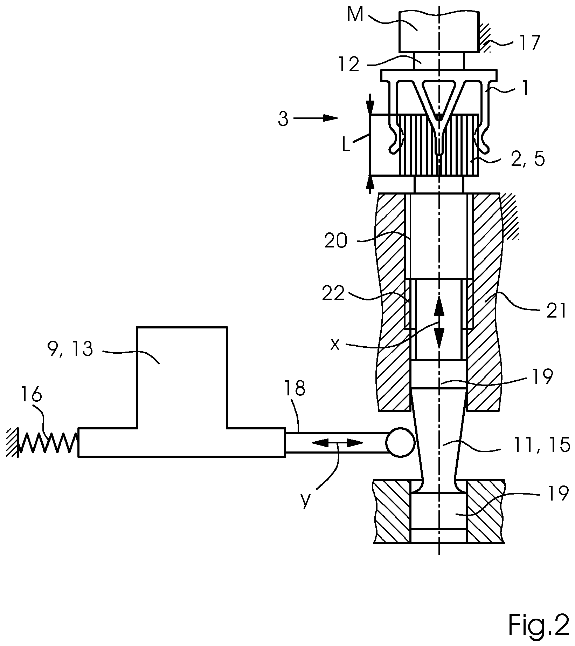

Jeder Druckbalken 13 trägt eine Reihe von Druckköpfen 9 - vgl. Figur 2 - , die sich über die Breite der Bogen erstreckt. Die Druckköpfe 9 sind mit Düsen (nicht gezeigt) ausgestattet, aus denen die Tinte ausgestoßen wird. Jedem Druckkopf 9 ist eine Justiereinrichtung 10 mit einem Anschlag 15 und einer Feder 16 zugeordnet. Die Justiervorrichtungen 10 dienen dazu, die Druckköpfe 9 relativ zueinander zu verstellen, was im gegebenen Beispiel entlang des Druckbalkens 13 linear erfolgt. Es wäre aber auch eine andere Stellrichtung, z.B. in Bogentransportrichtung, oder eine andere Stellbewegungsform, z.B. eine Schwenkbewegung, möglich.

In Figur 2 ist einer der Druckköpfe 9 und eine der Justiereinrichtungen 10 dargestellt. Der Anschlag 15 ist über eine Ausgleichskupplung 3 mit einem elektrischen Motor M gekoppelt, der an einem Gestell 17 befestigt ist. Der Motor M ist vorzugsweise ein Schrittmotor. Der Druckkopf 9 wird von einem Halter 18 getragen, der am Anschlag 15 anliegt. Es wäre aber auch möglich, dass direkt der Druckkopf 9 selbst am Anschlag 15 anliegt. Der Anschlag 15 ist als Konus ausgebildet und bildet einen Abschnitt einer Schraube 11. Die Schraube 11 kann auch als Stellwelle oder Konuswelle bezeichnet werden.

Außer dem Anschlag 15 hat die Schraube 11 weitere Abschnitte, nämlich Passungen 19 als Gleitlager und ein Außengewinde 20. Der Anschlag 15 befindet sich zwischen den Passungen 19. Die Passungen 19 sitzen gleitend in einem oder mehreren Bauteilen 21. Das Bauteil 21 hat ein Innengewinde 22, in welches das Außengewinde 20 eingeschraubt ist, wobei die Schraube 11 und das Bauteil 21 zusammen ein Schraubengetriebe zum translatorischen Verstellen des Anschlags 15 in Richtung x bilden. Richtung x entspricht der Rotationsachse der Schraube 11.

Der Druckkopf 9 oder sein Halter 18 bildet zusammen mit dem Anschlag 15 ein Keilgetriebe, welches die Bewegung des Anschlags 15 in Richtung x in eine Bewegung des Druckkopfes 9 in Richtung y umwandelt, die senkrecht zur Richtung x ist.

Entsprechend Figur 2 bewirkt eine Verstellung des Anschlags 15 nach unten, dass der Anschlag 15 den Druckkopf 9 gegen die Wirkung der Feder 16 nach links drückt. Eine Verstellung des Anschlags 15 nach oben bewirkt, dass Freiraum für eine Verstellung des Druckkopfs 9 durch die Feder 16 nach rechts vom Anschlag 15 freigegeben wird.

Der Motor M rotiert über die Ausgleichskupplung 3 die Schraube 11 und schraubt diese dabei ja nach Verstellrichtung etwas tiefer in das Bauteil 21 oder aus diesem etwas heraus. Durch die Ausgleichskupplung 3 ist die Schraube 11 mit einer Welle 12 verbunden, welche die Motorwelle des Motors M ist, wenn - wie im vorliegenden Beispiel - eine motorische Verstellung der Schraube 11 vorgesehen ist. Möglich wäre aber auch eine manuelle Verstellung der Schraube 11, wozu an der Welle 12 statt des Motors M ein Handgriff, z.B. ein Drehknopf, befestigt wäre. Die Ausgleichskupplung 3 umfasst eine erste Kupplungshälfte 1 und eine zweite Kupplungshälfte 2, wobei im gekuppelten Zustand die beiden Kupplungshälften 1, 2 miteinander drehstarr verbunden sind.

Die erste Kupplungshälfte 1 kann an auf der der Welle 12 fest sitzen oder daran angeformt sein. Die zweite Kupplungshälfte 2 kann auf der Schraube 11 fest sitzen oder daran angeformt sein. Die zweite Kupplungshälfte 2 kann einen Kopf am Ende der Schraube 11 bilden.

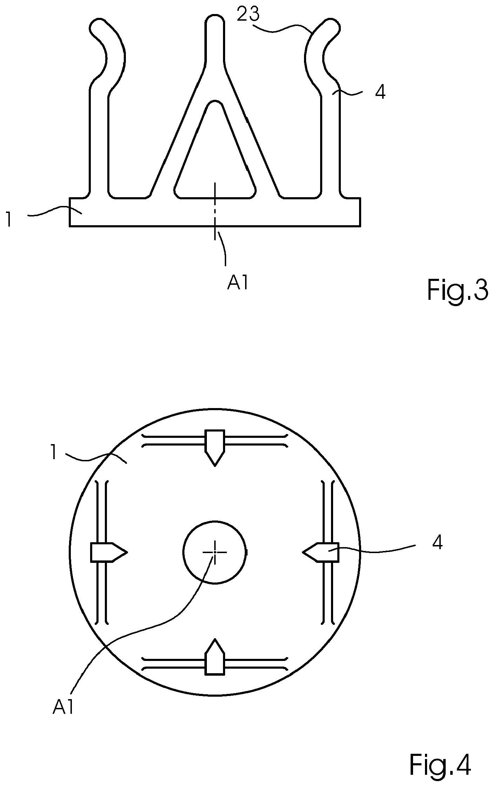

Figur 3 zeigt, dass die erste Kupplungshälfte 1 einen Satz von Federklauen 4 aufweist, die um die Rotationsachse A1 der ersten Kupplungshälfte 1 gleichverteilt sind. Jede Federklaue 4 besteht aus einem Federarm und einer Mitnehmerklaue, deren Schneide eine Rundung 23 nach innen aufweist. Durch die Rundungen 23 an den Federklauen 4 wird ein Winkelausgleich zwischen den Rotationsachsen A1, A2 der Kupplungshälften 1, 2 ermöglicht. Dabei wälzen die Rundungen 23 auf der zweiten Kupplungshälfte 2 ab und bilden sie zusammen eine Art Kugelgelenk oder Kreuzgelenk. Die erste Kupplungshälfte 1 ist die Gelenkpfanne und die zweite Kupplungshälfte 2 der Gelenkkopf der Ausgleichskupplung 3.

Die zweite Kupplungshälfte 2 ist ein Zahnrad mit einer Verzahnung 5, speziell einer Geradverzahnung, auf dem Außenumfang. In axialer Blickrichtung gesehen hat die zweite Kupplungshälfte 2 die Form eines Sterns. Die Ausgleichskupplung 3 fungiert als Schnellkupplung, wobei vom Bediener die erste Kupplungshälfte 1 werkzeuglos auf die zweite Kupplungshälfte 2 aufgesteckt wird, um die Schraube 11 mit dem Motor M zu verbinden. Die Federklauen 4 sind radial flexibel und spreizen sich beim Aufstecken etwas voneinander. Die Verzahnung 5 hat eine Länge L, die größer als der maximale Stellweg der Schraube 11 zwischen ihrer tiefsten und höchsten Einschraubposition oder Endposition ist. Somit bleiben die Federklauen 4 in jeder Einschraubposition der Schraube 11 im Eingriff in die Verzahnung 5; ein Ausgleich bei axialer Verschiebung der einen relativ zur anderen Kupplungshälfte 1, 2 ist gegeben.

Figur 4 zeigt, dass die erste Kupplungshälfte 1 vier Federklauen 4 umfasst, die paarweise angeordnet sind, wobei sich die beiden Federklauen 4 jedes Paares diametral gegenüberliegen.

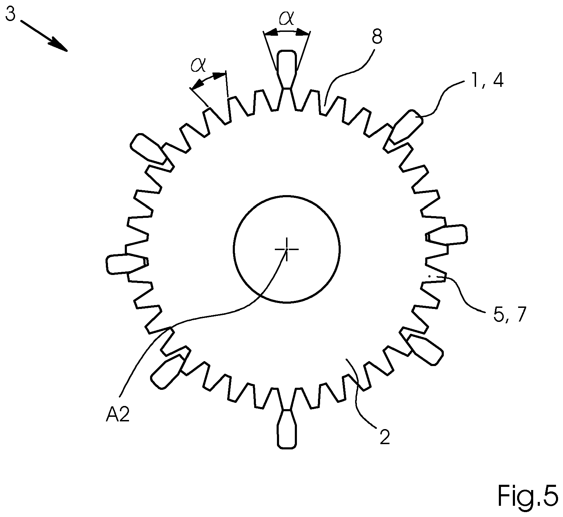

Figur 5 zeigt eine Modifikation mit gegenüber Figur 4 verdoppelter Anzahl von Federklauen 4.

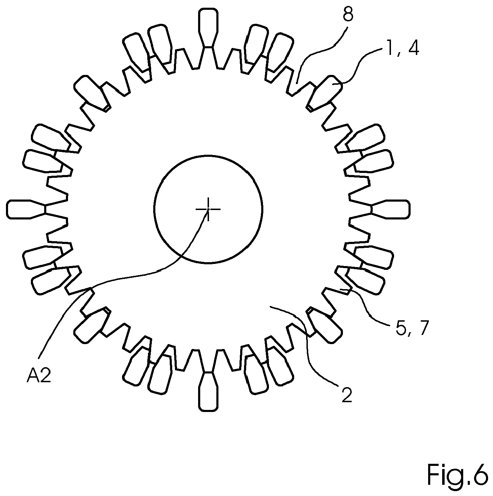

Figur 6 zeigt eine weitere Modifikation, bei der die Anzahl der Federklauen 4 noch weiter erhöht worden ist und diese entlang des Umfangs ungleichmäßig verteilt sind.

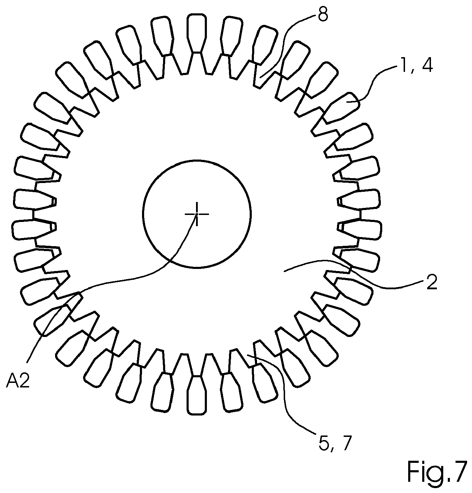

Figur 7 zeigt eine Modifikation, bei der die Anzahl der Federklauen 4 fast so groß wie die Anzahl von Zähnen 7 der Verzahnung 5 ist.

Bei allen Ausführungsbeispielen in den Figuren 2 bis 7 beträgt die Anzahl der Federklauen 4 weniger als die Anzahl der Zähne 7. Somit sind die Teilung der Verzahnung 5 und die Teilung der Federklauen 4 voneinander verschieden. Durch die ungleichen Teilungen ist sichergestellt, dass es in jeder Drehwinkelposition der ersten Kupplungshälfte 1 relativ zur zweiten Kupplungshälfte 2 eine oder vorzugsweise mehrere Federklauen 4 gibt, die in Lücken 8 zwischen den Zähnen 7 der Verzahnung 5 voll einrasten, und eine oder mehrere Federklauen 4 gibt, die in die Lücken 8 nur teilweise einrasten, und/oder eine oder mehrere Federklauen 4 gibt, die in die Lücken 8 gar nicht einrasten und an den Spitzen der Zähne 7 anliegen. Dadurch ist eine spielfreie und sichere Übertragung des Drehmoments möglich.

Der Flankenwinkel α der Federklauen 4 kann so ausgelegt sein, dass bei der Drehmomentübertragung Selbsthemmung aufgrund von Flankenreibung zwischen den Federklauen 4 und den Zähnen 7 auftritt, so dass die Federklauen 4 durch die Fliehkraft nicht außer Eingriff bewegt werden können.

### Bezugszeichenliste

- 1: erste Kupplungshälfte
- 2: zweite Kupplungshälfte
- 3: Ausgleichskupplung
- 4: Federklaue
- 5: Verzahnung
- 6: -
- 7: Zahn
- 8: Lücke
- 9: Druckkopf
- 10: Justiereinrichtung
- 11: Schraube
- 12: Welle
- 13: Druckbalken
- 14: -
- 15: Anschlag
- 16: Feder
- 17: Gestell
- 18: Halter
- 19: Passung
- 20: Außengewinde
- 21: Bauteil
- 22: Innengewinde
- 23: Rundung
- A1: Rotationsachse (der ersten Kupplungshälfte 1)
- A2: Rotationsachse (der zweiten Kupplungshälfte 2)
- L: Länge
- M: Motor
- x: Richtung
- y: Richtung
- α: Flankenwinkel

## Patentansprüche

1. Ausgleichskupplung (3), umfassend eine erste Kupplungshälfte (1) und eine zweite Kupplungshälfte (2), die unter elastischer Verformung ineinandersteckbar sind,
**dadurch gekennzeichnet,**
**dass** die erste Kupplungshälfte (1) Federklauen (4) und die zweite Kupplungshälfte (2) eine Verzahnung (5) aufweist, wobei die Federklauen (4) eine andere Teilung als die Verzahnung (5) aufweisen.

2. Ausgleichskupplung nach Anspruch 1,
**dadurch gekennzeichnet,**
**dass** die erste Kupplungshälfte (1) als Rad ausgebildet ist und die Federklauen (4) radial einfedern.

3. Ausgleichskupplung nach Anspruch 1 oder 2,
**dadurch gekennzeichnet,**
**dass** die zweite Kupplungshälfte (2) als Stern ausgebildet ist.

4. Ausgleichskupplung nach einem der Ansprüche 1 bis 3,
**dadurch gekennzeichnet,**
**dass** die Verzahnung (5) eine bestimmte Länge (L) für einen axialen Ausgleich aufweist.

5. Ausgleichskupplung nach einem der Ansprüche 1 bis 4,
**dadurch gekennzeichnet,**
**dass** die Federklauen (4) das Drehmoment übertragen und einen Ausgleich von Fluchtungsabweichungen zwischen Rotationsachsen (A1, A2) der Kupplungshälften (1, 2) bezüglich Achswinkel und/oder radialem Achsversatz bewirken.

6. Ausgleichskupplung nach einem der Ansprüche 1 bis 5,
**dadurch gekennzeichnet,**
**dass** die Anzahl von Zähnen (7) der Verzahnung (5) größer als die Anzahl der Federklauen (4) ist.

7. Ausgleichskupplung nach einem der Ansprüche 1 bis 6,
**dadurch gekennzeichnet,**
**dass** bei ineinandergesteckten Kupplungshälften (1, 2) von den Federklauen (4) eine Teilmenge in Lücken (8) der Verzahnung (5) eingreift und eine andere Teilmenge nicht.

8. Druckbalken (13) für Inkjet, umfassend Druckköpfe (9) in einer Reihe, Justiereinrichtungen (10) zur Justage der Druckköpfe (9) zueinander, wobei die Justiereinrichtungen (10) jeweils mindestens eine Schraube (11) und mindestens eine Welle (12) zum Rotieren der Schraube (11) aufweisen,
**dadurch gekennzeichnet,**
**dass** die Schraube (11) und die Welle (12) über die Ausgleichskupplung (3) nach einem der Ansprüche 1 bis 7 miteinander verbunden sind.

9. Druckbalken nach Anspruch 8,
**dadurch gekennzeichnet,**
**dass** die zweite Kupplungshälfte (2) an der Schraube (11) und die erste Kupplungshälfte (1) an der Welle (12) angeordnet ist.

10. Druckbalken nach Anspruch 8 oder 9,
**dadurch gekennzeichnet,**
**dass** die Welle (12) eine Motorwelle eines Motors (M) ist.
